# EUROPEAN PATENT SPECIFICATION

(11) **EP 3 406 693 B1**
(45) Date of publication and mention of the grant of the patent: **23.12.2020**
(21) Application number: 17741455.4
(22) Date of filing: 19.01.2017
(51) Int. Cl.: C10M 105/36, C10M 105/32, C10M 111/04, C10M 169/04, C09K 5/04, C10M 105/34, C10M 107/24, C10M 129/76, C10M 137/04, C10N 20/00, C10N 30/00, C10N 40/30, C10M 171/00

(54) **FREEZER OIL FOR R32 REFRIGERANT AND COMPOSITION COMPRISING SAME**
GEFRIERÖL FÜR R32-KÄLTEMITTEL UND ZUSAMMENSETZUNG DAMIT
HUILE DE CONGÉLATEUR POUR RÉFRIGÉRANT R32 ET COMPOSITION LA COMPRENANT

(30) Priority: 20.01.2016 JP 2016008803; 08.07.2016 JP 2016135733; 06.01.2017 JP 2017001210
(43) Date of publication of application: 28.11.2018
(73) Proprietor: NOF Corporation, Shibuya-ku Tokyo 150-6019 (JP)
(72) Inventor: YOSHIKAWA, Fumitaka, Amagasaki-shi Hyogo 660-0095 (JP); KAJIKI, Takeshi, Amagasaki-shi Hyogo 660-0095 (JP); UEDA, Seita, Amagasaki-shi Hyogo 660-0095 (JP); YAMADA, Munehiro, Amagasaki-shi Hyogo 660-0095 (JP)
(74) Representative: J A Kemp LLP
(86) International application number: PCT/JP2017/001651
(87) International publication number: WO 2017/126578

(56) References cited:
- EP-A1- 0 562 405
- EP-A1- 0 562 405
- EP-A1- 2 857 383
- JP-A- H0 913 063
- JP-A- 2001 089 785
- JP-A- 2007 528 440
- DATABASE WPI Week 201553 December 2015 (2015-12) Thomson Scientific, London, GB; AN 2015-43345T XP002790813, & JP 2015 140994 A (HITACHI APPLIANCES INC) 3 August 2015 (2015-08-03)

## Description

### [Technical Field]

The present invention relates to a refrigerating machine oil for R32 refrigerant superior in the property of dissolving an additive (additive-dissolving property) and a composition containing same.

### [Background Art]

Conventionally, a chlorofluorocarbon refrigerant containing chlorine has been used for air-conditioning equipments such as room air conditioner, package air conditioner and the like, domestic refrigerator-freezer, industrial refrigerating machine, and air conditioner for cars such as hybrid car, electric car and the like. In recent years, hydrofluorocarbon (HFC) refrigerants such as R134a refrigerant (1,1,1,2-tetrafluoroethane), R125 refrigerant (pentafluoroethane), R410A refrigerant (mixed refrigerant of R32 refrigerant (difluoromethane) and R125 refrigerant (pentafluoroethane)) and the like are used instead of these chlorinated refrigerants causing destruction of ozone layer and the like. These HFC refrigerants have a high global warming potential (GWP) of 1000 or more although the ozone depletion coefficient is zero. For this reason, they are subject to the regulation aiming at reduction of the greenhouse effect, and the use thereof is restricted. Thus, the use of a refrigerant with low GWP is being studied. For example, conversion to single use of HFO-1234yf refrigerant (2,3,3,3-tetrafluoropropene) with GWP of 4, R32 refrigerant (difluoromethane) with GWP of 675 and the like is being promoted.

When an R32 refrigerant with low GWP is used, the discharge temperature of compressor becomes high, which renders the lubrication condition in the compressor stricter. To improve lubricity, various additives have heretofore been studied. For example, patent document 1 discloses a refrigerating machine oil composition containing a given base oil, a phosphorus extreme pressure agent and an oily agent. In addition, patent document 2 discloses a refrigerating machine oil composition containing a base oil and (a) partial ester of polyhydric alcohol and fatty acid, and (b) acidic phosphate or an amine salt thereof. Also, patent document 3 discloses a refrigerating machine oil containing a base oil and a particular phosphorus compound.

Patent Document 4 discloses use of esters of citric acid as lubricants in a refrigerant machine oil comprising partially fluorinated hydrocarbons.

Patent Document 5 discloses mixed citric acid esters made from citric acid and a blend of monohydric alcohols. The esters are disclosed as platicizers in plastics compositions.

Patent Document 6 discloses a refrigerating machine oil for R32 refrigerant comprising a polyol ester and polyvinylether.

### [Document List]

### [Patent documents]

patent document 1: JP-A-2010-209360
patent document 2: JP-A-2000-256692
patent document 3: JP-A-2016-50242
patent document 4: EP-A-0562405
patent document 5: EP-A-2857383
patent document 6: JP-A-2015-140994

### [SUMMARY OF THE INVENTION]

### [Problems to be Solved by the Invention]

R32 refrigerant is inferior to conventional refrigerants in the additive-dissolving property. Thus, an additive with high crystallinity easily precipitates in a refrigerating machine oil to be in contact with R32 refrigerant. In some cases, therefore, a conventional additive superior in the lubricity-improving effect may be difficult to use, and improvement of the additive-dissolving property of a refrigerating machine oil has been desired. The present invention has been made in view of such situation, and aims to provide a refrigerating machine oil for R32 refrigerant and superior in the additive-dissolving property.

### [Means of Solving the Problems]

The present inventors have conducted intensive studies in an attempt to solve the aforementioned problem and found that a particular citric acid triester has superior additive-dissolving property and completed the present invention. The present invention based on such finding is as described below.
[1] A refrigerating machine oil for R32 refrigerant, comprising the following component (A) and component (B1):
   (A) a citric acid triester composed of citric acid and a monohydric aliphatic alcohol having 2 - 10 carbon atoms
   (B1) an ester of a monovalent to divalent aliphatic carboxylic acid having 4 - 12 carbon atoms,
      wherein the component (A) is a citric acid triester composed of citric acid and the following component (a1) and component (a2), and a molar ratio of the component (a1) and the component (a2) constituting said citric acid triester (component
      (a1)/component (a2)) is 60/40 - 95/5:
      (a1) a monohydric aliphatic alcohol having 2 - 5 carbon atoms,
      (a2) a monohydric aliphatic alcohol having 6 - 10 carbon atoms, and
   wherein a mass ratio of the component (A) and the component (B1) (component (A)/(B1)) is 3/97 - 30/70.
[2] The refrigerating machine oil of the aforementioned [1], wherein the component (B1) is an ester composed of the following component (b11) and component (b12):
   (b11) a monohydric to hexahydric aliphatic alcohol having 2 - 10 carbon atoms
   (b12) a monovalent to divalent aliphatic carboxylic acid having 4 - 12 carbon atoms.
[3] A refrigerating machine oil for R32 refrigerant, comprising the following component (A) and component (B2):
   (A) a citric acid triester composed of citric acid and a monohydric aliphatic alcohol having 2 - 10 carbon atoms
   (B2) alkyl vinyl ether-based polymer,
      wherein the component (A) is a citric acid triester composed of citric acid and the following component (a1) and component (a2), and a molar ratio of the component (a1) and the component (a2) constituting said citric acid triester (component
      (a1)/component (a2)) is 60/40 - 95/5:
      (a1) a monohydric aliphatic alcohol having 2 - 5 carbon atoms,
      (a2) a monohydric aliphatic alcohol having 6 - 10 carbon atoms, and
   wherein a mass ratio of the component (A) and the component (B2) (component (A)/component (B2)) is 3/97 - 30/70.
[4] The refrigerating machine oil of the aforementioned [3], wherein the component (B2) is an alkyl vinyl ether-based polymer composed of the following monomer (b21) and monomer (b22), or composed of the following monomer (b21), and a molar ratio of the monomer (b21) unit and the monomer (b22) unit in the aforementioned alkyl vinyl ether-based polymer (monomer (b21) unit/monomer (b22) unit) is 70/30 - 100/0:
   (b21) ethyl vinyl ether
   (b22) isobutyl vinyl ether.
[5] A refrigerating machine oil composition for R32 refrigerant comprising an additive and the refrigerating machine oil of any one of the aforementioned [1] to [4], wherein the said additive is triphenyl phosphate and/or glycerol monooleate and a content of the aforementioned additive is 0.01 - 5 mass %.
[6] A working fluid composition for refrigerating machines comprising the refrigerating machine oil of any one of the aforementioned [1] to [4] and R32 refrigerant.
[7] A working fluid composition for refrigerating machines comprising the refrigerating machine oil composition of the aforementioned [5] and R32 refrigerant.

Preferable embodiments of the present invention are as described below.
[2-1] A refrigerating machine oil for R32 refrigerant comprising a mixture of component (A) and component (B1), wherein a mass ratio of the component (A) and the component (B1) (component (A)/component (B1)) is 3/97 - 30/70:
   (A) a citric acid triester composed of citric acid and a monohydric aliphatic alcohol having 2 - 10 carbon atoms
   (B1) an ester of monovalent to divalent aliphatic carboxylic acid having 4 - 12 carbon atoms,
      wherein the component (A) is a citric acid triester composed of citric acid and the following component (a1) and component (a2), and a molar ratio of the component (a1) and the component (a2) constituting the aforementioned citric acid triester (component (a1)/component (a2)) is 60/40 - 95/5:
      (a1) a monohydric aliphatic alcohol having 2 - 5 carbon atoms
      (a2) a monohydric aliphatic alcohol having 6 - 10 carbon atoms.
[2-2] The refrigerating machine oil of the aforementioned [2-1], wherein the component (B1) is an ester composed of the following component (b11) and component (b12):
   (b11) a monohydric to hexahydric aliphatic alcohol having 2 - 10 carbon atoms
   (b12) a monovalent to divalent aliphatic carboxylic acid having 4 - 12 carbon atoms.
[2-3] A refrigerating machine oil composition for R32 refrigerant comprising an additive wherein said additive is triphenyl phosphate and/or glycerol monooleate and the refrigerating machine oil of any one of the aforementioned [2-1] to [2-2], wherein a content of the aforementioned additive is 0.01 - 5 mass %.
[2-4] A working fluid composition for refrigerating machines comprising the refrigerating machine oil of any one of the aforementioned [2-1] to [2-2] and R32 refrigerant.
[2-5] A working fluid composition for refrigerating machines comprising the refrigerating machine oil composition of the aforementioned [2-3] and R32 refrigerant.

Preferable other embodiments of the present invention are as described below.
[3-1] A refrigerating machine oil for R32 refrigerant comprising the following component (A) and component (B2), wherein a mass ratio of the component (A) and the component (B2) (component (A)/component (B2)) is 3/97 - 30/70:
   (A) a citric acid triester composed of citric acid and a monohydric aliphatic alcohol having 2 - 10 carbon atoms
   (B2) an alkyl vinyl ether-based polymer,
      wherein the component (A) is a citric acid triester composed of citric acid and the following component (a1) and component (a2), and a molar ratio of the component (a1) and the component (a2) constituting the aforementioned citric acid triester (component
      (a1)/component (a2)) is 60/40 - 95/5:
      (a1) a monohydric aliphatic alcohol having 2 - 5 carbon atoms
      (a2) a monohydric aliphatic alcohol having 6 - 10 carbon atoms.
[3-2] The refrigerating machine oil of the aforementioned [3-1], wherein the component (B2) is an alkyl vinyl ether-based polymer composed of the following monomer (b21) and monomer (b22), or composed of the following monomer (b21), and a molar ratio of the monomer (b21) unit and the monomer (b22) unit in the aforementioned alkyl vinyl ether-based polymer (monomer (b21) unit/monomer (b22) unit) is 70/30 - 100/0:
   (b21) ethyl vinyl ether
   (b22) isobutyl vinyl ether.
[3-3] A refrigerating machine oil composition for R32 refrigerant comprising an additive wherein said additive is triphenyl phosphate and/or glycerol monooleate, and the refrigerating machine oil of any one of the aforementioned [3-1] to [3-2], wherein a content of the aforementioned additive is 0.01 - 5 mass %.
[3-4] A working fluid composition for refrigerating machines comprising the refrigerating machine oil of any one of the aforementioned [3-1] to [3-2] and R32 refrigerant.
[3-5] A working fluid composition for refrigerating machines comprising the refrigerating machine oil composition of the aforementioned [3-3] and R32 refrigerant.

### [Effect of the Invention]

The refrigerating machine oil of the present invention for R32 refrigerant (difluoromethane) has superior additive-dissolving property and can be preferably used for compressors of refrigerating air-conditioning equipment and refrigerator and the like which are particularly required to have lubricity. In addition, since the refrigerating machine oil of the present invention for R32 refrigerant has high compatibility with R32 refrigerant (difluoromethane), it can be preferably used for a working fluid composition for refrigerating machines containing R32 refrigerant.

### [Description of Embodiments]

The refrigerating machine oil of the present invention for R32 refrigerant is explained in detail below.

In the present specification, number ranges defined by using a symbol "-" includes numerical values at the both ends (upper limit and the lower limit) of "-". For example, "2 - 10" means not less than 2 and not more than 10.

The refrigerating machine oil of the present invention for R32 refrigerant (hereinafter to be also simply abbreviated as "the refrigerating machine oil of the present invention") contains component (A) and component (B1) and/or component (B2) as described below.

In the present invention, the "refrigerating machine oil" generally means a lubricating oil for a compressor in a refrigerating air-conditioning equipment and examples of the refrigerating air-conditioning equipment include air conditioner and the like. In the present specification, moreover, the "refrigerating machine oil for R32 refrigerant" means a lubricating oil for a compressor and the like in a refrigerating air-conditioning equipment using R32 refrigerant (difluoromethane).

### [Component (A)]

Component (A) used in the present invention is a citric acid triester composed of citric acid and a monohydric aliphatic alcohol having 2 - 10 carbon atoms (i.e., a citric acid triester formed from citric acid and a monohydric aliphatic alcohol having 2 - 10 carbon atoms).

As the citric acid for producing the aforementioned citric acid triester, industrially available citric acid can be used. Citric acid anhydride may also be used for the production of citric acid trimester.

The carbon number of the aforementioned monohydric aliphatic alcohol is preferably 3 - 10, more preferably 3 - 9. One or more kinds of the aforementioned monohydric aliphatic alcohol can be used. Specific examples of the aforementioned monohydric aliphatic alcohol include specific examples of the below-mentioned monohydric aliphatic alcohol having 2 - 5 carbon atoms (component (a1)) and monohydric aliphatic alcohol having 6 - 10 carbon atoms (component (a2)).

A monohydric aliphatic alcohol having 2 - 5 carbon atoms (component (a1)) and a monohydric aliphatic alcohol having 6 - 10 carbon atoms (component (a2)) are used in combination. One or more kinds of each of these component (a1) and component (a2) can be used.

Examples of component (a1) include ethanol, 1-propanol, 2-propanol, 1-butanol, 2-butanol, 2-methyl-1-propanol, 2-methyl-2-propanol, 1-pentanol, 2-pentanol, 3-pentanol, 3-methyl-1-butanol and the like. Component (a1) is preferably a monohydric aliphatic alcohol having 3 - 5 carbon atoms, more preferably a linear saturated monohydric aliphatic alcohol having 3 - 5 carbon atoms. Using 1-butanol, citric acid triester superior in the solubility, lubricity and low temperature stability with R32 refrigerant can be obtained. Thus, it is preferable that component (a1) contains 1-butanol. Component (a1) is more preferably 1-butanol.

Examples of component (a2) include 1-hexanol, 2-hexanol, 3-hexanol, 2-methyl-1-pentanol, 2-ethyl-butanol, 1-heptanol, 2-heptanol, 3-heptanol, 2-methyl-1-hexanol, 2-ethyl-1-pentanol, 1-octanol, 2-octanol, 3-octanol, 2-methyl-1-heptanol, 2-ethyl-1-hexanol, 1-nonanol, 2-nonanol, 3-nonanol, 2-methyl-1-octanol, 2-ethyl-1-heptanol, 1-decanol, 2-decanol, 3-decanol, 2-methyl-1-nonanol, 2-ethyl-1-octanol and the like. When the alkyl group derived from alcohol in refrigerating machine oil (citric acid triester) is a branched chain, the refrigerating machine oil tends to be superior in low temperature stability and compatibility with R32. Thus, component (a2) is preferably branched chain saturated monohydric aliphatic alcohol having 6 - 10 carbon atoms, more preferably branched chain saturated monohydric aliphatic alcohol having 7 - 9 carbon atoms. Using 2-ethyl-1-hexanol, an ester superior in the property of redissolving precipitated additive (additive-redissolving property), lubricity and low temperature stability can be obtained. Thus, it is preferable that component (a2) contains 2-ethyl-1-hexanol. Component (a2) is more preferably 2-ethyl-1-hexanol.

The molar ratio of component (a1) and component (a2) in citric acid triester (component (a1)/component (a2)) is 60/40 - 95/5. By adjusting the molar ratio to fall within this range, citric acid triester superior in the additive-redissolving property can be obtained. The molar ratio (component (a1)/component (a2)) is more preferably 65/35 - 90/10, further preferably 65/35 - 85/15.

The method for adjusting the molar ratio of component (a1) and component (a2) constituting the citric acid triester (component (a1)/component (a2)) is not particularly limited. For example, citric acid or citric acid anhydride and a mixture of component (a1) and component (a2) may be reacted, or resultant products from reactions of citric acid or citric acid anhydride and each of component (a1) and component (a2) may be mixed.

The molar ratio of component (a1) and component (a2) constituting the citric acid triester (component (a1)/component (a2)) can be analyzed by gas chromatography. For example, citric acid triester (0.1 g) is diluted with a toluene/methanol mixed solvent (5 g) at a mass ratio of 80/20, then 28 mass % sodium methoxide methanol solution (manufactured by Wako Pure Chemical Industries, Ltd.) (0.3 g) is added, and the mixture is stood at ambient temperature for 30 min, whereby methanolysis of the citric acid triester is carried out. The obtained decomposed ester solution is analyzed by gas chromatography, and the molar ratio of component (a1) and component (a2) constituting the citric acid triester (component (a1)/component (a2)) can be calculated from the peak area ratio of the obtained component (a1) and component (a2). By analyzing gas chromatography of each alcohol alone, the kind of the alcohol constituting the citric acid triester can be identified.

Citric acid triester can be produced by, for example, charging citric acid or citric acid anhydride and monohydric aliphatic alcohol in a reactor, and performing an esterification reaction under a nitrogen atmosphere at normal pressure or under reduced pressure at, for example, 150 - 250°C while evaporating the reaction water. The acid number of the obtained citric acid triester is preferably not more than 10 mgKOH/g, more preferably not more than 5 mgKOH/g, further preferably not more than 2 mgKOH/g. The esterification reaction may be performed without catalyst, or Broensted acid catalyst or Lewis acid catalyst may be used.

An esterification reaction for obtaining citric acid triester is preferably performed using excess monohydric aliphatic alcohol relative to citric acid or citric acid anhydride. In this case, after esterification reaction, excess alcohol is evaporated under reduced pressure. The obtained citric acid triester is preferably subjected to a purification treatment using, for example, an adsorbent.

The kinematic viscosity of citric acid triester at 40°C is preferably 5 - 300 mm²/s, more preferably 10 - 200 mm²/s, further preferably 10 - 150 mm²/s. The acid number thereof is preferably not more than 10 mgKOH/g, more preferably not more than 5 mgKOH/g, further preferably not more than 2 mgKOH/g, particularly preferably not more than 1 mgKOH/g. The aforementioned kinematic viscosity can be measured according to JIS K2283. The aforementioned acid number can be measured according to JIS C2101.

### [Component (B1)]

The refrigerating machine oil of the present invention may also contain, in addition to component (A), an ester of a monovalent - divalent aliphatic carboxylic acid having 4 - 12 carbon atoms as component (B1).

Component (B1) is preferably an ester composed of the following component (b11) and component (b12) (i.e., an ester formed from the following component (b11) and component (b12)).
(b11) a monohydric - hexahydric aliphatic alcohol having 2 - 10 carbon atoms
(b12) a monovalent - divalent aliphatic carboxylic acid having 4 - 12 carbon atoms

Only one kind of component (b11) (i.e., alcohol component of component (B1)) may be used or two or more kinds thereof may be used. Similarly, only one kind of component (b12) (i.e., acid component of component (B1)) may be used or two or more kinds thereof may be used.

Component (b11) is preferably one or more kinds of dihydric - hexahydric aliphatic alcohols having 2 - 10 carbon atoms. Specific examples of the dihydric - hexahydric aliphatic alcohol having 2 - 10 carbon atoms include ethylene glycol, 1,3-propanediol, 1,4-butanediol, 1,5-pentanediol, 1,6-hexanediol, glycerol, trimethylolethane, dipentaerythritol and the like. Of these, 1,4-butanediol is preferable.

Preferable specific examples of the dihydric - hexahydric aliphatic alcohol having 2 - 10 carbon atoms include "neopentyl polyol". The "neopentyl polyol" is a dihydric - hexahydric polyol having a neopentyl structure, preferably, a dihydric - tetrahydric polyol having a neopentyl structure. Examples of such neopentyl polyol include 2,2-dimethyl-1,3-propanediol (neopentyl glycol), 2,2-diethyl-1,3-propanediol, 2-propyl-2-methyl-1,3-propanediol, 2-propyl-2-ethyl-1,3-propanediol, 2,2-dipropyl-1,3-propanediol, 2-butyl-2-methyl-1,3-propanediol, 2-butyl-2-ethyl-1,3-propanediol, 2-butyl-2-propyl-1,3-propanediol, 2,2-dibutyl-1,3-propanediol, trimethylolpropane, pentaerythritol and the like. Of these, 2,2-dimethyl-1,3-propanediol (neopentyl glycol) or pentaerythritol is preferable.

As component (b11), a monohydric alcohol having 2 - 10 carbon atoms may be used. As the monohydric aliphatic alcohol having 2 - 10 carbon atoms, a linear or branched chain saturated monohydric aliphatic alcohol having 2 - 10 carbon atoms is preferable. Specific examples thereof include specific examples of "(a1) a monohydric aliphatic alcohol having 2 - 5 carbon atoms" and "(a2) a monohydric aliphatic alcohol having 6 - 10 carbon atoms" as of the aforementioned alcohol component of component (A). The linear or branched chain saturated monohydric aliphatic alcohol having 2 - 10 carbon atoms is preferably a branched chain saturated monohydric aliphatic alcohol, more preferably a branched chain saturated monohydric aliphatic alcohol having 4 - 9 carbon atoms, further preferably a branched chain saturated monohydric aliphatic alcohol having 8 - 9 carbon atoms, particularly preferably 3,5,5-trimethylhexanol and/or 2-ethylhexanol, most preferably 3,5,5-trimethylhexanol or 2-ethylhexanol.

When component (b11) contains a monohydric aliphatic alcohol and a dihydric - hexahydric aliphatic alcohol, the proportion of the hydroxy group derived from the monohydric aliphatic alcohol to the total number of moles of hydroxy group in the whole component (b11) is preferably not more than 30 mol%, more preferably not more than 20 mol%.

From the aspects of the thermal stability and the like of refrigerating machine oil, component (b11) preferably contains neopentyl polyol. The proportion of the hydroxy group derived from neopentyl polyol to the total number of moles of hydroxy group in the whole component (b11) is more preferably not less than 50 mol%, still more preferably not less than 60 mol%, most preferably not less than 70 mol%. The whole component (b11) may be neopentyl polyol.

As component (b12), one or more kinds of monovalent aliphatic carboxylic acid having 4 - 12 carbon atoms can be used. As the monovalent aliphatic carboxylic acid having 4 - 12 carbon atoms, a linear or branched chain saturated monovalent aliphatic carboxylic acid having 4 - 12 carbon atoms is preferable, particularly, the branched chain saturated monovalent aliphatic carboxylic acid is more preferable since ester superior in the low temperature stability and R32 compatibility is obtained. The carbon number of the aforementioned carboxylic acid is preferably 4 - 10. Specific examples of such monovalent aliphatic carboxylic acid include 2-methylpropanoic acid, 2-methylbutanoic acid, 2-ethylhexanoic acid, 3,5,5-trimethylhexanoic acid, neodecanoic acid and the like and 2-methylpropanoic acid, 2-ethylhexanoic acid and 3,5,5-trimethylhexanoic acid are particularly preferable.

As component (b12), one or more kinds of divalent aliphatic carboxylic acid having 4 - 12 carbon atoms can be used. As the divalent aliphatic carboxylic acid having 4 - 12 carbon atoms, a linear divalent aliphatic carboxylic acid having 4 - 10 carbon atoms and carboxy groups on carbons at both ends is preferable. A saturated divalent aliphatic carboxylic acid is preferable since ester superior in the thermal stability is obtained. Furthermore, a linear saturated divalent aliphatic carboxylic acid having 4 - 10 carbon atoms and a carboxy groups on carbons at both ends is more preferable. Specific examples of such divalent carboxylic acid include succinic acid (carbon number 4), glutaric acid (carbon number 5), adipic acid (carbon number 6), pimelic acid (carbon number 7), suberic acid (carbon number 8), azelaic acid (carbon number 9), sebacic acid (carbon number 10) and the like.

As the divalent aliphatic carboxylic acid having 4 - 12 carbon atoms, a divalent aliphatic carboxylic acid having 6 - 8 carbon atoms is preferable since ester more superior in the viscosity index and low temperature stability can be obtained. Adipic acid, pimelic acid and suberic acid are particularly preferable, and adipic acid is most preferable.

Component (B1) can be produced by, for example, charging a monohydric - hexahydric aliphatic alcohol having 2 - 10 carbon atoms as component (b11) and a monovalent - divalent aliphatic carboxylic acid having 4 - 12 carbon atoms as component (b12) in a reactor, and performing an esterification reaction under a nitrogen atmosphere at normal pressure or under reduced pressure at, for example, 150 - 250°C while evaporating the reaction water. The esterification reaction may be performed without catalyst, or Broensted acid catalyst or Lewis acid catalyst may be used. When the above-mentioned esterification reaction is performed, the excess percentage of the carboxy group or hydroxy group can be appropriately adjusted. After esterification reaction, excess carboxylic acid or aliphatic alcohol is evaporated under reduced pressure and the obtained crude polyol ester is preferably subjected to a purification treatment using, for example, an adsorbent.

The acid number of component (B1) is preferably not more than 10 mgKOH/g, more preferably not more than 5 mgKOH/g, further preferably not more than 2 mgKOH/g, from the aspects of the thermal stability of refrigerating machine oil. The aforementioned acid number can be measured according to JIS C2101.

The composition of component (b11) and component (b12) constituting component (B1) can be analyzed by gas chromatography. For example, component (B1) (0.1 g) is diluted with a toluene/methanol mixed solvent (5 g) at a mass ratio of 80/20, then 28 mass % sodium methoxide methanol solution (manufactured by Wako Pure Chemical Industries, Ltd.) (0.3 g) is added, and the mixture is stood at ambient temperature for 30 min, whereby methanolysis of the component (B1) is carried out. The obtained decomposed ester solution is analyzed by gas chromatography, and the molar ratio of the components constituting component (B1) can be calculated from the peak area ratio of the obtained component (b11) and component (b12). By analyzing gas chromatography of each component, the kind of the component constituting component (B1) can be identified.

### [Component (B2)]

The refrigerating machine oil of the present invention may contain, in addition to component (A), an alkyl vinyl ether-based polymer obtained by polymerizing an alkyl vinyl ether as component (B2). Only one kind of component (B2) may be used or two or more kinds thereof may be used in combination. Examples of the alkyl vinyl ether include ethyl vinyl ether, 1-propyl vinyl ether, isopropyl vinyl ether, 1-butyl vinyl ether, isobutyl vinyl ether, 1-hexyl vinyl ether, 1-octyl vinyl ether, 2-ethylhexyl vinyl ether, 1-decyl vinyl ether, isodecyl vinyl ether and the like. The carbon number of the alkyl group of an alkyl vinyl ether is preferably 1 - 10, more preferably 1 - 8, further preferably 1 - 6.

An alkyl vinyl ether-based polymer may contain, in addition to a unit derived from the above-mentioned an alkyl vinyl ether, a unit derived from other monomer. While such other monomer is not particularly limited as long as it is a monomer copolymerizable with an alkyl vinyl ether (e.g., monomer having an olefinic double bond), for example, polyoxyalkylene alkyl vinyl ether and the like can be mentioned.

When the alkyl vinyl ether-based polymer is a copolymer, the polymer may be a random copolymer or a block copolymer.

The number average molecular weight of the alkyl vinyl ether-based polymer is preferably 500 - 3,000, more preferably 500 - 2,000, further preferably 500 - 1,500. The kinematic viscosity of the vinyl ether-based polymer at 40°C is preferably 3 - 500 mm²/s, more preferably 5 - 200 mm²/s, further preferably 5 - 150 mm²/s. The aforementioned number average molecular weight can be measured by gel permeation chromatography (GPC) using polystyrene as the standard sample. The aforementioned kinematic viscosity can be measured according to JIS K2283.

Component (B2) is preferably an alkyl vinyl ether-based polymer composed of the following monomer (b21) and monomer (b22) (i.e., formed from the following monomer (b21) and monomer (b22)), or composed of the following monomer (b21) (i.e., formed from the following monomer (b21)) (hereinafter sometimes to be abbreviated as "alkyl vinyl ether-based polymer (P1)").
(b21) ethyl vinyl ether
(b22) isobutyl vinyl ether

The molar ratio of monomer (b21) unit and monomer (b22) unit (monomer (b21) unit/monomer (b22) unit) in the alkyl vinyl ether-based polymer (P1) is preferably 70/30 - 100/0, more preferably 75/25 - 100/0, further preferably 80/20 - 100/0. The molar ratio can be measured by ¹H-NMR. For example, in the ¹H-NMR measurement (solvent: deuterochloroform, standard: tetramethylsilane) of the alkyl vinyl ether-based polymer (P1), a signal derived from the alkyl terminal CH₃ of ethyl vinyl ether is detected in the chemical shift value 1.05 - 1.25 ppm and a signal derived from the alkyl terminal CH₃ of isobutyl vinyl ether is detected in the chemical shift value 0.80 - 1.00 ppm. The molar ratio of each monomer unit can be calculated from the ratio of integrated values of these signals.

An alkyl vinyl ether-based polymer can be produced by a known method. For example, it can be produced by subjecting an alkyl vinyl ether and other monomer as necessary to radical polymerization or cation polymerization in the presence of a polymerization initiator. Examples of the polymerization initiator include Broensted acid, Lewis acid, organic metal compound and the like. Examples of the Broensted acid include trichloroacetic acid, trifluoroacetic acid and the like. Examples of the Lewis acid include boron trifluoride, zinc chloride and the like. Examples of the organic metal compound include diethylaluminum chloride and the like.

Polymerization is generally performed in a solvent. Examples of the solvent include hexane, toluene, ethyl ether, tetrahydrofuran and the like. Polymerization temperature is, for example, -50 to 150°C, preferably -50 to 100°C. Polymerization time is, for example, 10 min - 10 hr, preferably 1 hr - 8 hr. The polymerization is preferably performed under an inert gas atmosphere such as nitrogen or the like. The polymerization is preferably terminated with alkali.

### [Refrigerating machine oil]

The refrigerating machine oil of the present invention contains component (A). In a preferable embodiment, the refrigerating machine oil of the present invention contains component (A) and component (B1), or component (A) and component (B2). In the following, a mixture of component (A) and component (B1) (i.e., mixed ester) is sometimes to be abbreviated as "mixture (AB1)" and a mixture of component (A) and component (B2) is sometimes to be abbreviated as "mixture (AB2)".

When the refrigerating machine oil of the present invention contains component (A) and component (B1), the mass ratio of component (A) and component (B1) (component (A)/component (B1)) in the refrigerating machine oil is 3/97 - 30/70. When the aforementioned mass ratio is within this range, superior additive-dissolving property is obtained. While the method for mixing component (A) and component (B1) is not particularly limited, for example, a method including measuring any amount of component (A) and component (B1) in a beaker and stirring and mixing them with stirring blades can be mentioned. The mass ratio of component (A) and component (B1) (component (A)/component (B1)) is preferably 3/97 - 25/75, more preferably 3/97 - 20/80. When the mass ratio of component (A) and component (B1) (component (A)/component (B1)) is apart from the range of 1/99 - 30/70 and the proportion of component (A) is small, superior additive-dissolving property is difficult to obtain. When the proportion of component (A) is high, the property of the refrigerating machine oil will reach a peak and it sometimes becomes difficult to obtain additive-dissolving property and chlorofluorocarbon-dissolving property suitable for the content of component (A).

The kinematic viscosity of mixture (AB1) at 40°C is preferably 5 - 300 mm²/s, more preferably 10 - 250 mm²/s, further preferably 10 - 200 mm²/s. The acid number of mixture (AB1) is preferably not more than 10 mgKOH/g, more preferably not more than 5 mgKOH/g, further preferably not more than 2 mgKOH/g, particularly preferably not more than 1 mgKOH/g. The aforementioned kinematic viscosity can be measured according to JIS K2283. The aforementioned acid number can be measured according to JIS C2101.

When the refrigerating machine oil of the present invention contains component (A) and component (B2), the mass ratio of component (A) and component (B2) (component (A)/component (B2)) in the refrigerating machine oil is 3/97 - 30/70. When the aforementioned mass ratio is within this range, superior additive-dissolving property is obtained. While the method for mixing component (A) and component (B2) is not particularly limited, for example, a method including measuring any amount of component (A) and component (B2) in a beaker and stirring and mixing them with stirring blades can be mentioned. The mass ratio of component (A) and component (B2) (component (A)/component (B2)) is preferably 3/97 - 25/75, more preferably 3/97 - 20/80. When the mass ratio of component (A) and component (B2) (component (A)/component (B2)) is apart from the range of 1/99 - 30/70 and the proportion of component (A) is small, superior additive-dissolving property is difficult to obtain. When the proportion of component (A) is high, the property of the refrigerating machine oil will reach a peak and it sometimes becomes difficult to obtain additive-dissolving property and the property to dissolve chlorofluorocarbon (chlorofluorocarbon-dissolving property) suitable for the content of component (A).

The kinematic viscosity of mixture (AB2) at 40°C is preferably 5 - 300 mm²/s, more preferably 10 - 250 mm²/s, further preferably 10 - 200 mm²/s. The acid number of mixture (AB2) is preferably not more than 10 mgKOH/g, more preferably not more than 5 mgKOH/g, further preferably not more than 2 mgKOH/g, particularly preferably not more than 1 mgKOH/g. The aforementioned kinematic viscosity can be measured according to JIS K2283. The aforementioned acid number can be measured according to JIS C2101.

### [Refrigerating machine oil composition for R32 refrigerant]

The present invention also provides a refrigerating machine oil composition for R32 refrigerant containing an additive having a cloud point of not less than -30°C when dissolved at a concentration of 10 mass % in a mixed solvent of 1,1,1,3,3-pentafluorobutane and ethyl acetate at a mass ratio (1,1,1,3,3-pentafluorobutane/ethyl acetate) of 75/25, and the aforementioned refrigerating machine oil for R32 refrigerant.

The content of the aforementioned additive is 0.01 - 5 mass %, preferably 0.1 - 4 mass %, of the refrigerating machine oil composition for R32 refrigerant. This refrigerating machine oil composition for R32 refrigerant can achieve a superior effect that it is free from precipitation of additive and can afford the effects of various additives suitable for the amount added.

As the aforementioned additive, any can be used as long as it has a cloud point of not less than -30°C when measured under the aforementioned conditions. Only one kind of the aforementioned additive may be used or two or more kinds thereof may be used in combination. The refrigerating machine oil of the present invention for R32 refrigerant is superior in the additive-dissolving property, and therefore, the refrigerating machine oil composition of the present invention for R32 refrigerant can use an additive having a high cloud point and difficult to dissolve. The cloud point of the aforementioned additive as measured under the above-mentioned conditions is preferably not less than -20°C, more preferably not less than -15°C. The cloud point can be measured according to JIS 2269 "Testing Methods for Pour Point and Cloud Point of Crude Oil and Petroleum Products".

Examples of the aforementioned additive include load carrying additive, antioxidant, metal deactivator and acid scavengers. Since the lubrication condition of a compressor using R32 refrigerant becomes stricter than that using a conventional HFC refrigerant, a load carrying additive is preferable as the aforementioned additive. Here, the load carrying additive means an additive functioning when the metal friction surfaces cannot be separated by an oil film and the metal frictional surfaces come into contact with each other. Examples thereof include oiliness improver, anti-wear agent and extreme pressure agent.

Examples of the load carrying additive include fatty acid ester-based additive, ether-based additive, phosphate-based additive and thiophosphate-based additive. Of these, fatty acid ester-based additive, phosphate-based additive and thiophosphate-based additive are preferable in view of lubricity-improving effect, and fatty acid ester-based additive and phosphate-based additive are more preferable. Examples of the phosphate-based additive include triphenyl phosphate and the like. Examples of the fatty acid ester-based additive include glycerol monooleate and the like. The aforementioned additive is preferably triphenyl phosphate and/or glycerol monooleate.

As mentioned above, the "refrigerating machine oil for R32 refrigerant" means a lubricating oil for compressor and the like in air conditioners using R32 refrigerant (difluoromethane), and the refrigerating machine oil for R32 refrigerant and the composition thereof of the present invention are also used for compressor and the like in air conditioners using R32 refrigerant. A refrigerating machine oil and a refrigerating machine oil composition used for compressors using a refrigerant containing R32 refrigerant, for example, R410R refrigerant (mixture of R125 refrigerant (pentafluoroethane)/R32 refrigerant (difluoromethane) with mass ratio of 50/50) or R410B (mixture of R125 refrigerant (pentafluoroethane)/R32 refrigerant (difluoromethane) with mass ratio of 55/45) are also encompassed in the refrigerating machine oil for R32 refrigerant and refrigerating machine oil composition for R32 refrigerant of the present invention. The refrigerating machine oil for R32 refrigerant of the present invention has superior additive-dissolving property not achieved by conventional refrigerating machine oil for R32 refrigerant, the refrigerating machine oil for R32 refrigerant and the composition thereof of the present invention are most useful when used in a compressor using only the R32 refrigerant which is poor in additive-dissolving property as a refrigerant.

The present invention also provides the aforementioned refrigerating machine oil for R32 refrigerant, refrigerating machine oil composition for R32 refrigerant, and a working fluid composition for refrigerating machines, which contains R32 refrigerant. The content of the refrigerating machine oil for R32 refrigerant in these working fluid compositions for refrigerating machines is preferably 1 - 500 parts by mass, more preferably 2 - 400 parts by mass, per 100 parts by mass of the R32 refrigerant (difluoromethane).

### [Example]

The present invention is explained in more detail in the following by illustrating Examples and Comparative Examples; however, the scope of the present invention is not limited by the following Examples. Any examples which do not fall within the claims are described for reference purposes only.

### [Synthesis of citric acid triester (component (A)) and other ester]

### Production Example 1

Citric acid anhydride (282 g, 1.47 mol), 1-butanol (294 g, 3.97 mol), and 2-ethyl-1-hexanol (114 g, 0.87 mol) were charged in a four-necked flask, and the reaction was performed for 5 hr under a nitrogen atmosphere at 200°C at normal pressure while evaporating the reaction water. Thereafter, the reaction was continued at 200°C until the acid number became not more than 2 mgKOH/g. Successively, excess alcohol was evaporated under reduced pressure of 1 - 5 kPa at 200°C to give a crude ester. The crude ester was cooled, acid clay and silica-alumina-based adsorbent were each added at 1.0 mass % of the theoretically obtained ester amount and an adsorption treatment was performed (adsorption treatment temperature: 100°C, pressure: 1 - 5 kPa, adsorption treatment time: 2 hr). Finally, the mixture was filtered through a 1 micron filter to give the object citric acid triester (acid number not more than 0.1 mgKOH/g) (hereinafter to be indicated as "ester A1").

### Production Example 2

Citric acid anhydride (295 g, 1.53 mol), 1-butanol (326 g, 4.40 mol) and 1-octanol (86 g, 0.66 mol) were charged in a four-necked flask, and the reaction was performed for 5 hr under a nitrogen atmosphere at 200°C at normal pressure while evaporating the reaction water. The following steps were performed in the same manner as in Production Example 1 to give the object citric acid triester (hereinafter to be indicated as "ester A2").

### Production Example 3

Citric acid anhydride (307 g, 1.60 mol), 2-propanol (206 g, 3.43 mol), and 1-hexanol (189 g, 1.85 mol) were charged in a four-necked flask, and the reaction was performed for 6 hr under a nitrogen atmosphere at 200°C at normal pressure while evaporating the reaction water. The following steps were performed in the same manner as in Production Example 1 to give the object citric acid triester (hereinafter to be indicated as "ester A3").

### Production Example 4

Citric acid anhydride (269 g, 1.40 mol), 2-butanol (247 g, 3.33 mol), and 3,5,5-trimethylhexanol (187 g, 1.29 mol) were charged in a four-necked flask, and the reaction was performed for 6 hr under a nitrogen atmosphere at 200°C at normal pressure while evaporating the reaction water. The following steps were performed in the same manner as in Production Example 1 to give the object citric acid triester (hereinafter to be indicated as "ester A4").

### Production Example 5

Citric acid anhydride (346 g, 1.80 mol), ethanol (137 g, 2.97 mol), and 1-butanol (220 g, 2.97 mol) were charged in a four-necked flask, and the reaction was performed for 7 hr under a nitrogen atmosphere at 180°C at normal pressure while evaporating the reaction water. The following steps were performed in the same manner as in Production Example 1 to give the object citric acid triester (hereinafter to be indicated as "ester A5").

### Production Example 6

Citric acid anhydride (307 g, 1.60 mol) and 1-butanol (391 g, 5.28 mol) were charged in a four-necked flask, and the reaction was performed for 5 hr under a nitrogen atmosphere at 200°C at normal pressure while evaporating the reaction water. The following steps were performed in the same manner as in Production Example 1 to give the object citric acid triester (hereinafter to be indicated as "ester A6").

### Production Example 7

Citric acid anhydride (218 g, 1.13 mol) and 2-ethyl-1-hexanol (487 g, 3.74 mol) were charged in a four-necked flask, and the reaction was performed for 5 hr under a nitrogen atmosphere at 220°C at normal pressure while evaporating the reaction water. The following steps were performed in the same manner as in Production Example 1 to give the object citric acid triester (hereinafter to be indicated as "ester A7").

### Production Example 8

Pentaerythritol (129 g, 0.95 mol) and 2-ethyl-1-hexanoic acid (575 g, 3.99 mol) were charged in a four-necked flask, and the reaction was performed for 5 hr under a nitrogen atmosphere at 200°C at normal pressure while evaporating the reaction water. Successively, excess acid was evaporated under reduced pressure of 1 - 5 kPa at 200°C to give a crude ester. The crude ester was cooled, acid clay and silica-alumina-based adsorbent were each added at 1.0 mass % of the theoretically obtained ester amount and an adsorption treatment was performed (adsorption treatment temperature: 100°C, pressure: 1 - 5 kPa, adsorption treatment time: 2 hr). Finally, the mixture was filtered through a 1 micron filter to give an ester composed of pentaerythritol and 2-ethyl-1-hexanoic acid (hereinafter to be indicated as "ester A8").

Carboxylic acid and alcohol used in the production of ester A1 to ester A8 of the aforementioned Production Examples 1 - 8 are shown in the following Tables 1 and 2. In addition, the properties of ester A1 to ester A8 were measured by the below-mentioned method. The results are shown in the following Tables 1 and 2.

**[Table 1]**

| | ester A1 | ester A2 | ester A3 | ester A4 |
|---|---|---|---|---|
| carboxylic acid component | citric acid anhydride | citric acid anhydride | citric acid anhydride | citric acid anhydride |
| alcohol component (molar ratio) | 1-butanol/2-ethyl-1-hexanol (80/20) | 1-butanol/1-octanol (85/15) | 2-propanol/1-hexanol (60/40) | 2-butanol/3,5, 5-trimethylhexanol (70/30) |
| acid number (mgKOH/g) | 0.1 or below | 0.1 or below | 0.1 or below | 0.1 or below |
| pour point (°C) | -50 | -45 | -40 | -50 |

**[Table 2]**

| | ester A5 | ester A6 | ester A7 | ester A8 |
|---|---|---|---|---|
| carboxylic acid component | citric acid anhydride | citric acid anhydride | citric acid anhydride | 2-ethyl-1-hexanoic acid |
| alcohol component (molar ratio) | ethanol/1-butanol (50/50) | 1-butanol (100) | 2-ethyl-1-hexanol (100) | pentaerythrito 1 (100) |
| acid number (mgKOH/g) | 0.1 or below | 0.1 or below | 0.1 or below | 0.1 or below |
| pour point (°C) | -50 or below | -50 | -50 | -40 |

### [Synthesis of component (B1)]

### Production Example 9

Pentaerythritol (100 g, 0.73 mol), 2-ethylhexanoic acid (185 g, 1.29 mol), 3,5,5-trimethylhexanoic acid (377 g, 2.39 mol) were charged in a four-necked flask, and finally, 0.2 molar equivalents of titanium isopropoxide was charged relative to the hydroxy group of alcohol charged. The reaction was performed for 5 hr under a nitrogen atmosphere at 200°C at normal pressure while evaporating the reaction water. Then, excess 2-ethylhexanoic acid and 3,5,5-trimethylhexanoic acid were evaporated at temperature of 200°C and at pressure of 1 - 5 kPa to give a crude ester. The crude ester was cooled, acid clay and silica-alumina-based adsorbent were each added at 1.0 mass % of the theoretically obtained ester amount and an adsorption treatment was performed (adsorption treatment temperature: 100°C, pressure: 1 - 5 kPa, adsorption treatment time: 2 hr). Finally, the mixture was filtered through a 1 micron filter to give the object ester (hereinafter to be indicated as "ester B1-1").

### Production Example 10

Pentaerythritol (130 g, 0.95 mol), 2-methyl-propanoic acid (273 g, 3.10 mol) and 3,5,5-trimethylhexanoic acid (264 g, 1.67 mol) were charged in a four-necked flask, and finally, 0.2 molar equivalents of titanium isopropoxide was charged relative to the hydroxy group of alcohol charged. The reaction was performed for 5 hr under a nitrogen atmosphere at 200°C at normal pressure while evaporating the reaction water. Then, excess 2-methyl-propanoic acid and 3,5,5-trimethylhexanoic acid were evaporated at temperature of 200°C and at pressure of 1 - 5 kPa to give a crude ester. The following steps were performed in the same manner as in Production Example 9 to give the object ester (hereinafter to be indicated as "ester B1-2)").

### Production Example 11

Neopentyl glycol (205 g, 1.97 mol), 1,4-butanediol (26 g, 0.28 mol), adipic acid (373 g, 2.55 mol) and 3,5,5-trimethylhexanol(217 g, 1.50 mol) were charged in a four-necked flask, and the reaction was performed for 3 hr under a nitrogen atmosphere at 125°C at normal pressure while evaporating the reaction water. Thereafter, the reaction was continued for 7 hr at 200°C until the acid number became 2 or below. Then, excess 3,5,5-trimethylhexanol was evaporated at temperature of 200°C and at pressure of 1 - 5 kPa to give a crude ester. The following steps were performed in the same manner as in Production Example 9 to give the object ester (hereinafter to be indicated as "ester B1-3)").

Carboxylic acid and alcohol used in the production of ester B1-1 to ester B1-3 of the aforementioned Production Examples 9 - 11 are shown in the following Table 3. In addition, the properties of ester B1-1 to ester B1-3 were measured by the below-mentioned method. The results are shown in the following Table 3.

**[Table 3]**

| | ester B1-1 | ester B1-2 | ester B1-3 |
|---|---|---|---|
| carboxylic acid component (molar ratio) | 2-ethyl-1-hexanoic acid/3,5,5-trimethylhexanoic acid (35/65) | 2-methylpropanoi c acid/3,5,5-trimethylhexanoic acid (65/35) | adipic acid (100) |
| alcohol component (molar ratio) | pentaerythrito 1 (100) | pentaerythrito 1 (100) | neopentyl glycol/1,4-butanediol/3,5,5-trimethylhexanol (60/9/31) |
| acid number (mgKOH/g) | 0.1 or below | 0.1 or below | 0.1 or below |
| pour point (°C) | -45 | -32.5 | -45 |

### [Synthesis of component (B2)]

### Production Example 12

Ethanol (22.5 g), isobutyl alcohol (4.0 g), boron trifluoride diethyl ether complex (0.21 g) and toluene (150 mL) were charged in a 1-L reaction container. The mixture was heated to 45°C and maintain at this temperature. To this reaction container was continuously supplied a mixture of ethyl vinyl ether (415 g) and isobutyl vinyl ether (64 g) over 5 hr to give a polymer.

The above-mentioned polymer (200 g) and a nickel catalyst (5 g) were charged in an autoclave, and the inside of the autoclave was purged with nitrogen. Then, the inside of the autoclave was purged with hydrogen, the hydrogen pressure was set to 30 kg/cm²G, the mixture was heated to 140°C, and a hydrogenation reaction was performed at this temperature for 2 hr. Then, the reaction mixture was cooled, the pressure in the autoclave was reduced, and the reaction mixture was taken out. To the reaction mixture was added isooctane (50 g), and the catalyst was removed by filtration of the obtained mixture. The obtained filtrate was evaporated under reduced pressure to remove the solvent and volatile components to give the object alkyl vinyl ether-based polymer (hereinafter to be indicated as "polymer P1-1").

### Production Example 13

Ethanol (10.0 g), isobutyl alcohol (4.0 g), boron trifluoride diethyl ether complex (0.11 g) and toluene (80 mL) were charged in a 1-L reaction container. The mixture was heated to 45°C and maintain at this temperature. To this reaction container was continuously supplied a mixture of ethyl vinyl ether (185 g) and isobutyl vinyl ether (64 g) over 5 hr to give a polymer.

The above-mentioned polymer (200 g) and a nickel catalyst (5 g) were charged in an autoclave, and the inside of the autoclave was purged with nitrogen. Then, the inside of the autoclave was purged with hydrogen, the hydrogen pressure was set to 30 kg/cm²G, the mixture was heated to 140°C, and a hydrogenation reaction was performed at this temperature for 2 hr. Then, the reaction mixture was cooled, the pressure in the autoclave was reduced, and the reaction mixture was taken out. To the reaction mixture was added isooctane (50 g), and the catalyst was removed by filtration of the obtained mixture. The obtained filtrate was evaporated under reduced pressure to remove the solvent and volatile components to give the object alkyl vinyl ether-based polymer (hereinafter to be indicated as "polymer P1-2").

The properties of polymers P1-1 and P1-2 obtained in Production Examples 12 and 13 were measured by the below-mentioned method. The results are shown in the following Table 4.

**[Table 4]**

| | polymer P1-1 | polymer P1-2 |
|---|---|---|
| monomer unit (molar ratio) | ethyl vinyl ether/isobutyl vinyl ether (90/10) | ethyl vinyl ether/isobutyl vinyl ether (80/20) |
| acid number (mgKOH/g) | 0.1 or below | 0.1 or below |
| pour point (°C) | -40 | -32.5 |
| number average molecular weight | 930 | 1050 |

### [Molar ratio of alcohol component constituting ester A1 to ester A8]

Any of ester A1 to ester A8 (0.1 g) was diluted with a toluene/methanol mixed solvent at a mass ratio of 80/20 (5 g). Then, 28 mass % sodium methoxide methanol solution (manufactured by Wako Pure Chemical Industries, Ltd.) (0.3 g) was added, and the mixture was stood at ambient temperature for 30 min to carry out methanolysis of the ester. The obtained decomposed ester solution was analyzed by gas chromatography and the molar ratio of alcohol constituting the ester was calculated from the peak area ratio of the obtained alcohol.

### [Molar ratio of alcohol component and carboxylic acid component constituting esters B1-1 to Bl-3]

In the same manner as with ester A1 to ester A8, the decomposed ester solution obtained by methanolysis was analyzed by gas chromatography, the molar ratio of alcohol and carboxylic acid constituting the ester was calculated from the peak area ratio of the obtained alcohol and carboxylic acid.

### [Acid number]

According to JIS C2101, the acid number of ester A1 and the like was measured.

### [Pour point]

According to JIS K2269, the pour point of ester A1 and the like was measured.

### [Number average molecular weight]

The number average molecular weight of polymer P1-1 and P1-2 was measured by gel permeation chromatography (GPC) using the following apparatus and conditions.
apparatus: HLC-8220 manufactured by TOSOH
measurement column: shodex KF-805 L
guard column: shodex KF-G
solvent: THF
flow rate: 1 mL/min
column oven temperature: 40°C
standard sample: polystyrene

### [Molar ratio of monomer unit in alkyl vinyl ether-based polymer]

The molar ratio of monomer (b21) unit and monomer (b22) unit in polymers P1-1 and P1-2 was calculated by ¹H-NMR using the following apparatus and conditions.
apparatus: FT NMR System AL400 (400 MHz) manufactured by JEOL
solvent: deuterochloroform
standard: tetramethylsilane

### [Cloud point]

The cloud point when the additive (triphenyl phosphate and glycerol monooleate) used in the production of the below-mentioned refrigerating machine oil composition was dissolved at a concentration of 10 mass % in a mixed solvent of 1,1,1,3,3-pentafluorobutane and ethyl acetate at a mass ratio (1,1,1,3,3-pentafluorobutane/ethyl acetate) of 75/25 was measured according to JIS 2269. The cloud point of triphenyl phosphate measured under these conditions was -3°C and the cloud point of glycerol monooleate was 25°C.

### Example 1-1 to Example 1-7 and Comparative Example 1-1

Using the aforementioned ester A1 to ester A8 as a refrigerating machine oil, a two-layer separation temperature of ester A1 to ester A8 and R32 refrigerant was measured as follows. To be specific, any of ester A1 to ester A8 (2 g) and R32 refrigerant (6 g) were sealed in a pressure-resistant glass tube and cooled from 40°C at a rate of 1°C/min by using an ethanol bath containing dry ice. The temperature at which ester and R32 refrigerant was separated in two layers was measured within the range of -60°C to +40°C by visual observation. One with a two-layer separation temperature of +40°C or above was evaluated as ×, +40°C to -10°C as ○, and - 10°C or below as ⊙. The results are shown in the following Table 5.

**[Table 5]**

| | Example | | | | | | | Comparative Example |
|---|---|---|---|---|---|---|---|---|
| Example/ Comparative Example No. | 1-1 | 1-2 | 1-3 | 1-4 | 1-5 | 1-6 | 1-7 | 1-1 |
| ester No. | A1 | A2 | A3 | A4 | A5 | A6 | A7 | A8 |
| two-layer separation temperature (°C) (evaluation) | -45 (⊙) | -36 (⊙) | -35 (⊙) | -37 (⊙) | -60 or below (⊙) | -60 or below (⊙) | 35 (○) | 40 or above (×) |

### Example 1-8 to Example 1-14 and Comparative Example 1-2

Any of ester A1 to ester A8 (2 g), triphenyl phosphate (0.04 g), and R32 refrigerant (6 g) were sealed in a pressure-resistant glass tube, and dissolving them at ambient temperature to prepare working fluid composition 1-1 for refrigerating machines to working fluid composition 1-8 for refrigerating machines (Example 1-8 to Example 1-14 and Comparative Example 1-2).

### [Dissolving property test 1-1]

The obtained working fluid composition 1-1 for refrigerating machines to working fluid composition 1-8 for refrigerating machines were cooled at a rate of -5°C/hr from 20°C to -30°C, and the presence or absence of a precipitate was confirmed by visual observation. The temperature at which a precipitate was confirmed was recorded in units of 2.5°C. One without precipitation at -30°C was evaluated as ○. Ester A8 used for working fluid composition 1-8 for refrigerating machines was not dissolved in triphenyl phosphate and R32 refrigerant even at ambient temperature and working fluid composition 1-8 for refrigerating machines was clouded at ambient temperature. Thus, working fluid composition 1-8 for refrigerating machines (Comparative Example 1-2) was evaluated as ×. The results are shown in the following Table 6.

**[Table 6]**

| | Example | | | | | | | Comparative Example |
|---|---|---|---|---|---|---|---|---|
| Example/Comparative Example No. | 1-8 | 1-9 | 1-10 | 1-11 | 1-12 | 1-13 | 1-14 | 1-2 |
| No. of working fluid composition for refrigerating machines | 1-1 | 1-2 | 1-3 | 1-4 | 1-5 | 1-6 | 1-7 | 1-8 |
| No. of ester used | A1 | A2 | A3 | A4 | A5 | A6 | A7 | A8 |
| amount of refrigerating machine oil (ester) (g) | 2.0 | 2.0 | 2.0 | 2.0 | 2.0 | 2.0 | 2.0 | 2.0 |
| amount of triphenyl phosphate (cloud point: -3°C) (g) | 0.04 | 0.04 | 0.04 | 0.04 | 0.04 | 0.04 | 0.04 | 0.04 |
| content of triphenyl phosphate ¹⁾ (mass %) | 2.0 | 2.0 | 2.0 | 2.0 | 2.0 | 2.0 | 2.0 | 2.0 |
| dissolving property test 1-1 | ○ | ○ | ○ | ○ | ○ | ○ | ○ | ×²⁾ |

| | | | | | | | | |
|---|---|---|---|---|---|---|---|---|
| 1) content of triphenyl phosphate in refrigerating machine oil composition 2) clouded at ambient temperature | | | | | | | | |

### Example 1-15 to Example 1-21 and Comparative Example 1-3

Any of ester A1 to ester A8 (2 g), glycerol monooleate (0.02 g), and R32 refrigerant (6 g) were sealed in a pressure-resistant glass tube, and dissolving them at ambient temperature to prepare working fluid composition 1-9 for refrigerating machines to working fluid composition 1-16 for refrigerating machines (Example 1-15 to Example 1-21 and Comparative Example 1-3).

### [Dissolving property test 1-2]

The obtained working fluid composition 1-9 for refrigerating machines to working fluid composition 1-16 for refrigerating machines were cooled at a rate of -5°C/hr from 20°C to -30°C, and the presence or absence of a precipitate was confirmed by visual observation. The temperature at which a precipitate was confirmed was recorded in units of 2.5°C. Ester A8 used for working fluid composition 1-16 for refrigerating machines was not dissolved in glycerol monooleate and R32 refrigerant even at ambient temperature and working fluid composition 1-16 for refrigerating machines was clouded at ambient temperature. Thus, working fluid composition 1-16 for refrigerating machines (Comparative Example 1-3) was evaluated as ×. The results are shown in the following Table 7.

### [Redissolving property test 1-1]

The obtained working fluid composition 1-9 for refrigerating machines to working fluid composition 1-16 for refrigerating machines were stood in a thermostatic tank set to -30°C for 24 hr to allow for precipitation of glycerol monooleate in the refrigerating machine oil composition. Then, the refrigerating machine oil composition was rapidly transferred to a thermostatic tank at 30°C, and the time necessary for the precipitate in the mixture to be dissolved and transparent was measured. Ester A8 used for working fluid composition 1-16 for refrigerating machines was not dissolved in glycerol monooleate and R32 refrigerant even at ambient temperature and working fluid composition 1-16 for refrigerating machines was clouded at ambient temperature. Thus, working fluid composition 1-16 for refrigerating machines (Comparative Example 1-3) was evaluated as ×. The results are shown in the following Table 7.

**[Table 7]**

| | Example | | | | | | | Comparative Example |
|---|---|---|---|---|---|---|---|---|
| Example/Comparative Example No. | 1-15 | 1-16 | 1-17 | 1-18 | 1-19 | 1-20 | 1-21 | 1-3 |
| No. of working fluid composition for refrigerating machines | 1-9 | 1-10 | 1-11 | 1-12 | 1-13 | 1-14 | 1-15 | 1-16 |
| No. of ester used | A1 | A2 | A3 | A4 | A5 | A6 | A7 | A8 |
| amount of refrigerating machine oil (ester) (g) | 2.0 | 2.0 | 2.0 | 2.0 | 2.0 | 2.0 | 2.0 | 2.0 |
| amount of glycerol monooleate (cloud point: 25°C) (g) | 0.02 | 0.02 | 0.02 | 0.02 | 0.02 | 0.02 | 0.02 | 0.02 |
| content of glycerol monooleate ¹⁾ (mass %) | 1.0 | 1.0 | 1.0 | 1.0 | 1.0 | 1.0 | 1.0 | 1.0 |
| dissolving property test 1-2 (°C) | -22.5 | -20 | -20 | -22.5 | -20 | -22.5 | -20 | ×²⁾ |
| redissolving property test 1-1 (min) | 20 | 22.5 | 25 | 20 | 35 | 32.5 | 32.5 | ×²⁾ |

| | | | | | | | | |
|---|---|---|---|---|---|---|---|---|
| 1) content of glycerol monooleate in refrigerating machine oil composition 2) clouded at ambient temperature | | | | | | | | |

As is clear from the results shown in Tables 6 and 7, the refrigerating machine oil of the present invention for R32 refrigerant, which is component (A), is superior in the additive-dissolving property.

### Example 2-1 to Example 2-9 and Comparative Example 2-1 to Comparative Example 2-3

The aforementioned esters A1 to A7 and esters B1-1 to B1-3 were mixed at mixing ratios shown in the following Table 8 to prepare refrigerating machine oil 2-1 to refrigerating machine oil 2-12 (Example 2-1 to Example 2-9 and Comparative Example 2-1 to Comparative Example 2-3). Also, the acid number and pour point of refrigerating machine oil 2-1 to refrigerating machine oil 2-12 were measured as mentioned above. In addition, the two-layer separation temperature of refrigerating machine oil 2-1 to refrigerating machine oil 2-12 was measured as follows. The results are shown in the following Table 8.

### [Two-layer separation temperature]

Any of refrigerating machine oil 2-1 to refrigerating machine oil 2-12 (2 g) and R32 refrigerant (6 g) were sealed in a pressure-resistant glass tube and cooled from 40°C at a rate of 1°C/min by using an ethanol bath containing dry ice. The temperature at which ester and R32 refrigerant are separated in two layers was measured within the range of -20°C to +40°C by visual observation. One already showing two-layer separation and clouded at 40°C and one having a two-layer separation temperature of 30°C to 40°C were evaluated as ×.

**[Table 8]**

| | | Example | | | | | | | | | Comparative Example | | |
|---|---|---|---|---|---|---|---|---|---|---|---|---|---|
| Example/Comparative Example No. | | 2-1 | 2-2 | 2-3 | 2-4 | 2-5 | 2-6 | 2-7 | 2-8 | 2-9 | 2-1 | 2-2 | 2-3 |
| No. of refrigerating machine oil | | 2-1 | 2-2 | 2-3 | 2-4 | 2-5 | 2-6 | 2-7 | 2-8 | 2-9 | 2-10 | 2-11 | 2-12 |
| mixing ratio (mass %) | ester A1 | 30 | | | | 5 | 20 | | | | | | |
| | ester A2 | | 20 | | | | | | | | | | |
| | ester A3 | | | 30 | | | | | | | | | |
| | ester A4 | | | | 10 | | | | | | | | |
| | ester A5 | | | | | | | | 30 | | | | |
| | ester A6 | | | | | | | 20 | | | | | |
| | ester A7 | | | | | | | | | 10 | | | |
| | ester B1-1 | 70 | 80 | 70 | 60 | 60 | 50 | 80 | 70 | 60 | 100 | 70 | |
| | ester B1-2 | | | | 30 | 35 | | | | 30 | | 30 | |
| | ester B1-3 | | | | | | 30 | | | | | | 100 |
| acid number (mgKOH/ g) | | 0.1 or below | 0.1 or below | 0.1 or below | 0.1 or below | 0.1 or below | 0.1 or below | 0.1 or below | 0.1 or below | 0.1 or below | 0.1 or below | 0.1 or below | 0.1 or below |
| pour point (°C) | | -47.5 | -47.5 | -42.5 | -42.5 | -37.5 | -47.5 | -47.5 | -50 | -42.5 | -45 | -35 | -45 |
| two-layer separation temperature (°C) | | 5 | 19 | 8 | 9 | 10 | 17 | 17 | 6 | 12 | ×¹⁾ | ×²⁾ | ×¹⁾ |

| | | | | | | | | | | | | | |
|---|---|---|---|---|---|---|---|---|---|---|---|---|---|
| 1) clouded at 40°C 2) two-layer separation temperature = 34°C | | | | | | | | | | | | | |

### Example 2-10 to Example 2-18 and Comparative Example 2-4 to Comparative Example 2-6

Any of refrigerating machine oil 2-1 to refrigerating machine oil 2-12 (2 g), triphenyl phosphate (0.04 g), and R32 refrigerant (6 g) were sealed in a pressure-resistant glass tube, and mixed at 40°C to prepare working fluid composition 2-1 for refrigerating machines to working fluid composition 2-12 for refrigerating machines (Example 2-10 to Example 2-18 and Comparative Example 2-4 to Comparative Example 2-6).

### [Dissolving property test 2-1]

The obtained working fluid composition 2-1 for refrigerating machines to working fluid composition 2-12 for refrigerating machines were cooled at a rate of -5°C/hr from +40°C to +20°C, and the presence or absence of a precipitate was confirmed by visual observation. The temperature at which a precipitate was confirmed was recorded in units of 1°C. One without precipitation at +20°C was evaluated as ○.

Refrigerating machine oil 2-11 used for working fluid composition 2-11 for refrigerating machines was not dissolved in triphenyl phosphate and R32 refrigerant at +39°C, they were separated in two layers, and the refrigerating machine oil layer was clouded when cooled +20°C. Working fluid composition 2-10 for refrigerating machines and working fluid composition 2-12 for refrigerating machines were separated in two layers at +40°C, and the refrigerating machine oil layer was clouded when cooled to +20°C. Thus, working fluid composition 2-10 for refrigerating machines to working fluid composition 2-12 for refrigerating machines (Comparative Example 2-4 to Comparative Example 2-6) were evaluated as ×. The results are shown in the following Table 9.

**[Table 9]**

| | Example | | | | | | | | | Comparative Example | | |
|---|---|---|---|---|---|---|---|---|---|---|---|---|
| Example/Comparative Example No. | 2-10 | 2-11 | 2-12 | 2-13 | 2-14 | 2-15 | 2-16 | 2-17 | 2-18 | 2-4 | 2-5 | 2-6 |
| No. of working fluid composition for refrigerating machines | 2-1 | 2-2 | 2-3 | 2-4 | 2-5 | 2-6 | 2-7 | 2-8 | 2-9 | 2-10 | 2-11 | 2-12 |
| No. of refrigerating machine oil used | 2-1 | 2-2 | 2-3 | 2-4 | 2-5 | 2-6 | 2-7 | 2-8 | 2-9 | 2-10 | 2-11 | 2-12 |
| amount of refrigerating machine oil (g) | 2.0 | 2.0 | 2.0 | 2.0 | 2.0 | 2.0 | 2.0 | 2.0 | 2.0 | 2.0 | 2.0 | 2.0 |
| amount of triphenyl phosphate (cloud point: -3°C) (g) | 0.04 | 0.04 | 0.04 | 0.04 | 0.04 | 0.04 | 0.04 | 0.04 | 0.04 | 0.04 | 0.04 | 0.04 |
| content of triphenyl phosphate ¹⁾ (mass %) | 2.0 | 2.0 | 2.0 | 2.0 | 2.0 | 2.0 | 2.0 | 2.0 | 2.0 | 2.0 | 2.0 | 2.0 |
| dissolving property test 2-1 | ○ | ○ | ○ | ○ | ○ | ○ | ○ | ○ | ○ | ×²⁾ | ×³⁾ | ×²⁾ |

| | | | | | | | | | | | | |
|---|---|---|---|---|---|---|---|---|---|---|---|---|
| 1) content of triphenyl phosphate in refrigerating machine oil composition 2) layer separation at 40°C, refrigerating machine oil layer was clouded at 20°C 3) layer separation at 39°C, refrigerating machine oil layer was clouded at 20°C | | | | | | | | | | | | |

### Example 2-19 to Example 2-27 and Comparative Example 2-7 to Comparative Example 2-9

Any of refrigerating machine oil 2-1 to refrigerating machine oil 2-12 (2 g), glycerol monooleate (0.02 g), and R32 refrigerant (6 g) were sealed in a pressure-resistant glass tube, and mixed at 40°C to prepare working fluid composition 2-13 for refrigerating machines - working fluid composition 2-24 for refrigerating machines (Example 2-19 to Example 2-27 and Comparative Example 2-7 to Comparative Example 2-9).

### [Dissolving property test 2-2]

Working fluid composition 2-13 for refrigerating machines to working fluid composition 2-24 for refrigerating machines were cooled at a rate of -5°C/hr from +40°C to +20°C, and the presence or absence of a precipitate was confirmed by visual observation. The temperature at which a precipitate was confirmed was recorded in units of 1°C. One without precipitation at +20°C was evaluated as ○.

In working fluid composition 2-22 for refrigerating machines to working fluid composition 2-24 for refrigerating machines, the refrigerating machine oil 2-10 to refrigerating machine oil 2-12 used were not dissolved in glycerol monooleate and R32 refrigerant at +40°C, and were separated in two layers at +40°C, and the refrigerating machine oil layer was clouded when cooled to +20°C. Thus, working fluid composition 2-22 for refrigerating machines to working fluid composition 2-24 for refrigerating machines (Comparative Example 2-7 to Comparative Example 2-9) were evaluated as ×. The results are shown in the following Table 10.

### [Redissolving property test 2-1]

Working fluid composition 2-13 for refrigerating machines to working fluid composition 2-24 for refrigerating machines were stood in a thermostatic tank set to 0°C for 24 hr to allow for precipitation of glycerol monooleate in the mixture. Then, the mixture was rapidly transferred to a thermostatic tank at 30°C, and the time necessary for the precipitate in the mixture to be dissolved and transparent was measured. In working fluid composition 2-22 for refrigerating machines to working fluid composition 2-24 for refrigerating machines, the refrigerating machine oil 2-10 to refrigerating machine oil 2-12 used were not dissolved in glycerol monooleate and R32 refrigerant at +40°C and were clouded. Thus, working fluid composition 2-22 for refrigerating machines to working fluid composition 2-24 for refrigerating machines (Comparative Example 2-7 to Comparative Example 2-9) were evaluated as ×. The results are shown in the following Table 10.

**[Table 10]**

| | Example | | | | | | | | | Comparative Example | | |
|---|---|---|---|---|---|---|---|---|---|---|---|---|
| Example/Comparative Example No. | 2-19 | 2-20 | 2-21 | 2-22 | 2-23 | 2-24 | 2-25 | 2-26 | 2-27 | 2-7 | 2-8 | 2-9 |
| No. of working fluid composition for refrigerating machines | 2-13 | 2-14 | 2-15 | 2-16 | 2-17 | 2-18 | 2-19 | 2-20 | 2-21 | 2-22 | 2-23 | 2-24 |
| No. of refrigerating machine oil used | 2-1 | 2-2 | 2-3 | 2-4 | 2-5 | 2-6 | 2-7 | 2-8 | 2-9 | 2-10 | 2-11 | 2-12 |
| amount of refrigerating machine oil (g) | 2.0 | 2.0 | 2.0 | 2.0 | 2.0 | 2.0 | 2.0 | 2.0 | 2.0 | 2.0 | 2.0 | 2.0 |
| amount of glycerol monooleate (cloud point: +25°C) (g) | 0.02 | 0.02 | 0.02 | 0.02 | 0.02 | 0.02 | 0.02 | 0.02 | 0.02 | 0.02 | 0.02 | 0.02 |
| content of glycerol monooleate ¹⁾ (mass %) | 1.0 | 1.0 | 1.0 | 1.0 | 1.0 | 1.0 | 1.0 | 1.0 | 1.0 | 1.0 | 1.0 | 1.0 |
| dissolving property test 2-2 (°C) | ○ | ○ | ○ | ○ | ○ | ○ | ○ | ○ | ○ | ×²⁾ | ×²⁾ | ×²⁾ |
| redissolving property test 2-1 (min) | 22.5 | 25 | 25 | 27.5 | 27.5 | 25 | 35 | 40 | 37.5 | ×³⁾ | ×³⁾ | ×³⁾ |

| | | | | | | | | | | | | |
|---|---|---|---|---|---|---|---|---|---|---|---|---|
| 1) content of glycerol monooleate in refrigerating machine oil composition 2) layer separation at 40°C, refrigerating machine oil layer was clouded at 20°C 3) clouded at 40°C | | | | | | | | | | | | |

As is clear from the results shown in Tables 9 and 10, the refrigerating machine oil of the present invention for R32 refrigerant, which contains component (A) and component (B1) is superior in the additive-dissolving property.

### Example 3-1 to Example 3-9, Comparative Example 3-1 and Comparative Example 3-2

The aforementioned esters A1 to A7 and polymer P1-1 and polymer P1-2 were mixed at mixing ratios shown in the following Table 11 to prepare refrigerating machine oil 3-1 to refrigerating machine oil 3-11 (Example 3-1 to Example 3-9, Comparative Example 3-1 and Comparative Example 3-2). Also, the acid number and pour point of refrigerating machine oil 3-1 to refrigerating machine oil 3-11 were measured as mentioned above. In addition, the two-layer separation temperature of refrigerating machine oil 3-1 to refrigerating machine oil 3-11 was measured as follows. The results are shown in the following Table 11.

### [Two-layer separation temperature]

Any of refrigerating machine oil 3-1 to refrigerating machine oil 3-11 (1 g) and R32 refrigerant (6 g) were sealed in a pressure-resistant glass tube and cooled from 40°C at a rate of 1°C/min by using an ethanol bath containing dry ice. The temperature at which refrigerating machine oil and R32 refrigerant are separated in two layers was measured within the range of -20°C to +40°C by visual observation. One already showing two-layer separation and clouded at 40°C and one having a two-layer separation temperature of 10°C to 40°C were evaluated as ×.

**[Table 1]**

| | | Example | | | | | | | | | Comparative Example | |
|---|---|---|---|---|---|---|---|---|---|---|---|---|
| Example/Comparative Example No. | | 3-1 | 3-2 | 3-3 | 3-4 | 3-5 | 3-6 | 3-7 | 3-8 | 3-9 | 3-1 | 3-2 |
| No. of refrigerating machine oil | | 3-1 | 3-2 | 3-3 | 3-4 | 3-5 | 3-6 | 3-7 | 3-8 | 3-9 | 3-10 | 3-11 |
| mixing ratio (mass %) | ester A1 | 30 | | | | 5 | 20 | | | | | |
| | ester A2 | | 20 | | | | | | | | | |
| | ester A3 | | | 30 | | | | | | | | |
| | ester A4 | | | | 10 | | | | | | | |
| | ester A5 | | | | | | | | 30 | | | |
| | ester A6 | | | | | | | 20 | | | | |
| | ester A7 | | | | | | | | | 20 | | |
| | polymer P1-1 | 70 | 80 | 70 | 60 | 60 | 50 | 80 | 70 | 75 | 100 | |
| | polymer Pl-2 | | | | 30 | 35 | 30 | | | 5 | | 100 |
| acid number (mgKOH/ g) | | 0.1 or below | 0.1 or below | 0.1 or below | 0.1 or below | 0.1 or below | 0.1 or below | 0.1 or below | 0.1 or below | 0.1 or below | 0.1 or below | 0.1 or below |
| pour point (°C) | | -47.5 | -47.5 | -40 | -37.5 | -37.5 | -45 | -47.5 | -50 | -37.5 | -40 | -32.5 |
| two-layer separation temperature (°C) | | -20 | -6 | -17 | 0 | 2 | -7 | -8 | -19 | 3 | ×¹⁾ | ×²⁾ |

| | | | | | | | | | | | | |
|---|---|---|---|---|---|---|---|---|---|---|---|---|
| 1) two-layer separation temperature = 10°C 2) clouded at 40°C | | | | | | | | | | | | |

### Example 3-10 to Example 3-18, Comparative Example 3-3 and Comparative Example 3-4

Any of refrigerating machine oil 3-1 to refrigerating machine oil 3-11 (1 g), triphenyl phosphate (0.02 g), and R32 refrigerant (6 g) were sealed in a pressure-resistant glass tube and mixed at 40°C to prepare working fluid composition 3-1 for refrigerating machines to working fluid composition 3-11 for refrigerating machines (Example 3-10 to Example 3-18, Comparative Example 3-3 and Comparative Example 3-4).

### [Dissolving property test 3-1]

The obtained working fluid composition 3-1 for refrigerating machines to working fluid composition 3-11 for refrigerating machines were cooled at a rate of -5°C/hr from +40°C to +5°C, and the presence or absence of a precipitate was confirmed by visual observation. The temperature at which a precipitate was confirmed was recorded in units of 1°C.

One without precipitation at +5°C was evaluated as ○. Working fluid composition 3-10 for refrigerating machines was separated into two layers at +15°C, and the refrigerating machine oil layer was clouded when cooled to +5°C. In working fluid composition 3-11 for refrigerating machines, the refrigerating machine oil was not dissolved in triphenyl phosphate and R32 refrigerant at +40°C and separated into two layers, and the refrigerating machine oil layer was clouded when cooled to +5°C. Thus, working fluid composition 3-10 for refrigerating machines and working fluid composition 3-11 for refrigerating machines (Comparative Example 3-3 and Comparative Example 3-4) were evaluated as ×. The results are shown in the following Table 12.

**[Table 12]**

| | | | | | | | | | | | |
|---|---|---|---|---|---|---|---|---|---|---|---|
| | Example | | | | | | | | | Comparative Example | |

| Example/Comparative Example No. | 3-10 | 3-11 | 3-12 | 3-13 | 3-14 | 3-15 | 3-16 | 3-17 | 3-18 | 3-3 | 3-4 |
|---|---|---|---|---|---|---|---|---|---|---|---|
| No. of working fluid composition for refrigerating machines | 3-1 | 3-2 | 3-3 | 3-4 | 3-5 | 3-6 | 3-7 | 3-8 | 3-9 | 3-10 | 3-11 |
| No. of refrigerating machine oil used | 3-1 | 3-2 | 3-3 | 3-4 | 3-5 | 3-6 | 3-7 | 3-8 | 3-9 | 3-10 | 3-11 |
| amount of refrigerating machine oil (g) | 1.0 | 1.0 | 1.0 | 1.0 | 1.0 | 1.0 | 1.0 | 1.0 | 1.0 | 1.0 | 1.0 |
| amount of triphenyl phosphate (cloud point: -3°C) (g) | 0.02 | 0.02 | 0.02 | 0.02 | 0.02 | 0.02 | 0.02 | 0.02 | 0.02 | 0.02 | 0.02 |
| content of triphenyl phosphate ¹⁾ (mass %) | 2.0 | 2.0 | 2.0 | 2.0 | 2.0 | 2.0 | 2.0 | 2.0 | 2.0 | 2.0 | 2.0 |
| dissolving property test 3-1 | ○ | ○ | ○ | ○ | ○ | ○ | ○ | ○ | ○ | ×²⁾ | ×³⁾ |

| | | | | | | | | | | | |
|---|---|---|---|---|---|---|---|---|---|---|---|
| 1) content of triphenyl phosphate in refrigerating machine oil composition 2) layer separation at 15°C, refrigerating machine oil layer was clouded at 5°C 3) layer separation at 40°C, refrigerating machine oil layer was clouded at 5°C | | | | | | | | | | | |

### Example 3-19 to Example 3-27, Comparative Example 3-5 and Comparative Example 3-6

Any of refrigerating machine oil 3-1 to refrigerating machine oil 3-11 (1 g), glycerol monooleate (0.01 g), and R32 refrigerant (6 g) were sealed in a pressure-resistant glass tube and mixed at 40°C to prepare working fluid composition 3-12 for refrigerating machines to working fluid composition 3-22 for refrigerating machines (Example 3-19 to Example 3-27, Comparative Example 3-5 and Comparative Example 3-6).

### [Dissolving property test 3-2]

The obtained working fluid composition 3-12 for refrigerating machines to working fluid composition 3-22 for refrigerating machines were cooled at a rate of -5°C/hr from +40°C to +5°C, and the presence or absence of a precipitate was confirmed by visual observation. The temperature at which a precipitate was confirmed was recorded in units of 1°C.

One without precipitation at +5°C was evaluated as ○. Working fluid composition 3-21 for refrigerating machines was separated into two layers at +15°C, and the refrigerating machine oil layer was clouded when cooled to +5°C. In working fluid composition 3-22 for refrigerating machines, the refrigerating machine oil, and glycerol monooleate and R32 refrigerant were separated into two layers at +4 0°C, and the refrigerating machine oil layer was clouded when cooled to +5°C. Thus, working fluid composition 3-21 for refrigerating machines and working fluid composition 3-22 for refrigerating machines (Comparative Example 3-5 and Comparative Example 3-6) were evaluated as ×. The results are shown in the following Table 13.

### [Redissolving property test 3-1]

The obtained working fluid composition 3-12 for refrigerating machines to working fluid composition 3-22 for refrigerating machines were stood in a thermostatic tank set to -25°C for 24 hr to allow for precipitation of glycerol monooleate in the mixture. Then, the mixture was rapidly transferred to a thermostatic tank at 10°C, and the time necessary for the precipitate in the mixture to be dissolved and transparent was measured. In working fluid composition 3-21 for refrigerating machines and working fluid composition 3-22 for refrigerating machines, the refrigerating machine oil was not dissolved in glycerol monooleate and R32 refrigerant at 10°C and were clouded. Thus, working fluid composition 3-21 for refrigerating machines and working fluid composition 3-22 for refrigerating machines (Comparative Example 3-5 and Comparative Example 3-6) were evaluated as ×. The results are shown in the following Table 13.

**[Table 13]**

| | Example | | | | | | | | | Comparative Example | |
|---|---|---|---|---|---|---|---|---|---|---|---|
| Example/Comparative Example No. | 3-19 | 3-20 | 3-21 | 3-22 | 3-23 | 3-24 | 3-25 | 3-26 | 3-27 | 3-5 | 3-6 |
| No. of working fluid composition for refrigerating machines | 3-12 | 3-13 | 3-14 | 3-15 | 3-16 | 3-17 | 3-18 | 3-19 | 3-20 | 3-21 | 3-22 |
| No. of refrigerating machine oil used | 3-1 | 3-2 | 3-3 | 3-4 | 3-5 | 3-6 | 3-7 | 3-8 | 3-9 | 3-10 | 3-11 |
| amount of refrigerating machine oil (g) | 1.0 | 1.0 | 1.0 | 1.0 | 1.0 | 1.0 | 1.0 | 1.0 | 1.0 | 1.0 | 1.0 |
| amount of glycerol monooleate (cloud point: +25°C) (g) | 0.01 | 0.01 | 0.01 | 0.01 | 0.01 | 0.01 | 0.01 | 0.01 | 0.01 | 0.01 | 0.01 |
| content of glycerol monooleate ¹⁾ (mass %) | 1.0 | 1.0 | 1.0 | 1.0 | 1.0 | 1.0 | 1.0 | 1.0 | 1.0 | 1.0 | 1.0 |
| dissolving property test 3-2 (°C) | ○ | ○ | ○ | ○ | ○ | ○ | ○ | ○ | ○ | ×²⁾ | ×³⁾ |
| redissolving property test 3-1 (min) | 25.0 | 27.5 | 27.5 | 32.5 | 32.5 | 30.0 | 37.5 | 42.5 | 42.5 | ×⁴⁾ | ×⁴⁾ |

| | | | | | | | | | | | |
|---|---|---|---|---|---|---|---|---|---|---|---|
| 1) content of glycerol monooleate in refrigerating machine oil composition 2) layer separation at 15°C, refrigerating machine oil layer was clouded at 5°C 3) layer separation at 40°C, refrigerating machine oil layer was clouded at 5°C 4) clouded at 10°C | | | | | | | | | | | |

As is clear from the results shown in Tables 12 and 13, the refrigerating machine oil of the present invention for R32 refrigerant, which contains component (A) and component (B2) is superior in the additive-dissolving property.

### [Industrial Applicability]

The refrigerating machine oil for R32 refrigerant, refrigerating machine oil composition for R32 refrigerant and working fluid composition for refrigerating machines of the present invention can be preferably used in a compressor and the like of air conditioners using R32 refrigerant.

## Claims

1. A refrigerating machine oil for R32 refrigerant, comprising the following component (A) and component (B1):
(A) a citric acid triester composed of citric acid and a monohydric aliphatic alcohol having 2 - 10 carbon atoms
(B1) an ester of a monovalent to divalent aliphatic carboxylic acid having 4 - 12 carbon atoms,
wherein the component (A) is a citric acid triester composed of citric acid and the following component (a1) and component (a2), and a molar ratio of the component (a1) and the component (a2) constituting said citric acid triester (component (al)/component (a2)) is 60/40 - 95/5:
(a1) a monohydric aliphatic alcohol having 2 - 5 carbon atoms,
(a2) a monohydric aliphatic alcohol having 6 - 10 carbon atoms, and
wherein a mass ratio of the component (A) and the component (B1) (component (A)/(B1)) is 3/97 - 30/70.

2. The refrigerating machine oil according to claim 1, wherein the component (B1) is an ester composed of the following component (b11) and component (b12):
(b11) a monohydric to hexahydric aliphatic alcohol having 2 - 10 carbon atoms
(b12) a monovalent to divalent aliphatic carboxylic acid having 4 - 12 carbon atoms.

3. A refrigerating machine oil for R32 refrigerant, comprising the following component (A) and component (B2):
(A) a citric acid triester composed of citric acid and a monohydric aliphatic alcohol having 2 - 10 carbon atoms
(B2) alkyl vinyl ether-based polymer,
wherein the component (A) is a citric acid triester composed of citric acid and the following component (a1) and component (a2), and a molar ratio of the component (a1) and the component (a2) constituting said citric acid triester (component (al)/component (a2)) is 60/40 - 95/5:
(a1) a monohydric aliphatic alcohol having 2 - 5 carbon atoms,
(a2) a monohydric aliphatic alcohol having 6 - 10 carbon atoms, and
wherein a mass ratio of the component (A) and the component (B2) (component (A)/component (B2)) is 3/97 - 30/70.

4. The refrigerating machine oil according to claim 3, wherein the component (B2) is an alkyl vinyl ether-based polymer composed of the following monomer (b21) and monomer (b22), or composed of the following monomer (b21), and a molar ratio of the monomer (b21) unit and the monomer (b22) unit in said alkyl vinyl ether-based polymer (monomer (b21) unit/monomer (b22) unit) is 70/30 - 100/0:
(b21) ethyl vinyl ether
(b22) isobutyl vinyl ether.

5. A refrigerating machine oil composition for R32 refrigerant comprising an additive and the refrigerating machine oil according to any one of claims 1 to 4, wherein said additive is triphenyl phosphate and/or glycerol monooleate, and a content of said additive is 0.01 - 5 mass %.

6. A working fluid composition for refrigerating machines comprising the refrigerating machine oil according to any one of claims 1 to 4 and R32 refrigerant.

7. A working fluid composition for refrigerating machines comprising the refrigerating machine oil composition according to claim 5 and R32 refrigerant.

## Patentansprüche

1. Kältemaschinenöl für R32-Kältemittel, umfassend die folgende Komponente (A) und Komponente (B1):
(A) ein Zitronensäuretriester aus Zitronensäure und einem einwertigen aliphatischen Alkohol mit 2 bis 10 Kohlenstoffatomen;
(B1) ein Ester einer einwertigen bis zweiwertigen aliphatischen Carbonsäure mit 4 bis 12 Kohlenstoffatomen;
wobei die Komponente (A) ein Zitronensäuretriester aus Zitronensäure und der folgenden Komponente (a1) und Komponente (a2) ist und das Stoffmengenverhältnis der Komponente (a1) zu der Komponente (a2), die den Zitronensäuretriester bilden (Komponente (a1)/Komponente (a2)), 60/40 bis 95/5 beträgt:
(a1) ein einwertiger aliphatischer Alkohol mit 2 bis 5 Kohlenstoffatomen;
(a2) ein einwertiger aliphatischer Alkohol mit 6 bis 10 Kohlenstoffatomen; und
wobei das Massenverhältnis der Komponente (A) zu der Komponente (B1) (Komponente (A)/(B1)) 3/97 bis 30/70 beträgt.

2. Kältemaschinenöl gemäß Anspruch 1, wobei die Komponente (B1) ein Ester aus der folgenden Komponente (b11) und Komponente (b12) ist:
(b11) ein einwertiger bis sechswertiger Alkohol mit 2 bis 10 Kohlenstoffatomen;
(b12) eine einwertige bis zweiwertige aliphatische Carbonsäure mit 4 bis 12 Kohlenstoffatomen.

3. Kältemaschinenöl für R32-Kältemittel, umfassend die folgende Komponente (A) und Komponente (B2):
(A) ein Zitronensäuretriester aus Zitronensäure und einem einwertigen aliphatischen Alkohol mit 2 bis 10 Kohlenstoffatomen;
(B2) ein Polymer auf Alkylvinyletherbasis;
wobei die Komponente (A) ein Zitronensäuretriester aus Zitronensäure und der folgenden Komponente (a1) und Komponente (a2) ist und das Stoffmengenverhältnis der Komponente (a1) zu der Komponente (a2), die den Zitronensäuretriester bilden (Komponente (a1)/Komponente (a2)), 60/40 bis 95/5 beträgt:
(a1) ein einwertiger aliphatischer Alkohol mit 2 bis 5 Kohlenstoffatomen;
(a2) ein einwertiger aliphatischer Alkohol mit 6 bis 10 Kohlenstoffatomen; und
wobei das Massenverhältnis der Komponente (A) zu der Komponente (B2) (Komponente (A)/Komponente (B2)) 3/97 bis 30/70 beträgt.

4. Kältemaschinenöl gemäß Anspruch 3, wobei die Komponente (B2) ein Polymer auf Alkylvinyletherbasis aus dem folgenden Monomer (b21) und Monomer (b22) oder aus dem folgenden Monomer (b21) ist und das Stoffmengenverhältnis der Monomereinheit (b21) zu der Monomereinheit (b22) in dem Polymer auf Alkylvinyletherbasis (Monomereinheit (b21)/ Monomereinheit (b22)) 70/30 bis 100/0 beträgt:
(b21) Ethylvinylether
(b22) Isobutylvinylether.

5. Kältemaschinenölzusammensetzung für R32-Kältemittel, umfassend ein Additiv und das Kältemaschinenöl gemäß einem der Ansprüche 1 bis 4, wobei es sich bei dem Additiv um Triphenylphosphat und/oder Glycerinmonooleat handelt und der Gehalt an dem Additiv 0,01 bis 5 Massen-% beträgt.

6. Arbeitsmediumzusammensetzung für Kältemaschinen, umfassend das Kältemaschinenöl gemäß einem der Ansprüche 1 bis 4 und R32-Kältemittel.

7. Arbeitsmediumzusammensetzung für Kältemaschinen, umfassend das Kältemaschinenöl gemäß Anspruch 5 und R32-Kältemittel.

## Revendications

1. Huile de machine frigorifique pour réfrigérant R32, comprenant le composant (A) et le composant (B1) suivants :
(A) un triester d'acide citrique composé d'acide citrique et d'un alcool aliphatique monovalent ayant 2 à 10 atomes de carbone,
(B1) un ester d'un acide carboxylique aliphatique monovalent à divalent ayant 4 à 12 atomes de carbone,
dans laquelle le composant (A) est un triester d'acide citrique composé d'acide citrique et du composant (a1) et du composant (a2) qui suivent, et le rapport molaire du composant (a1) au composant (a2) constituant ledit triester d'acide citrique (composant (a1)/composant (a2)) est de 60/40 à 95/5 :
(a1) un alcool aliphatique monovalent ayant 2 à 5 atomes de carbone,
(a2) un alcool aliphatique monovalent ayant 6 à 10 atomes de carbone, et
dans laquelle le rapport en masse du composant (A) au composant (B1) (composants (A)/(B1)) est de 3/97 à 30/70.

2. Huile de machine frigorifique selon la revendication 1, dans laquelle le composant (B1) est un ester composé du composant (b11) et du composant (b12) suivants :
(b11) un alcool aliphatique monovalent à hexavalent ayant 2 à 10 atomes de carbone,
(b12) un acide carboxylique aliphatique monovalent à divalent ayant 4 à 12 atomes de carbone.

3. Huile de machine frigorifique pour réfrigérant R32, comprenant le composant (A) et le composant (B2) suivants :
(A) un triester d'acide citrique composé d'acide citrique et d'un alcool aliphatique monovalent ayant 2 à 10 atomes de carbone,
(B2) un polymère à base d'alkylvinyléther,
dans laquelle le composant (A) est un triester d'acide citrique composé d'acide citrique et du composant (a1) et du composant (a2) qui suivent, et le rapport molaire du composant (a1) au composant (a2) constituant ledit triester d'acide citrique (composant (a1)/composant (a2)) est de 60/40 à 95/5 :
(a1) un alcool aliphatique monovalent ayant 2 à 5 atomes de carbone,
(a2) un alcool aliphatique monovalent ayant 6 à 10 atomes de carbone, et
dans laquelle le rapport en masse du composant (A) au composant (B2) (composant (A)/composant (B2)) est de 3/97 à 30/70.

4. Huile de machine frigorifique selon la revendication 3, dans laquelle le composant (B2) est un polymère à base d'alkylvinyléther composé du monomère (b21) et du monomère (b22) qui suivent, ou composé du monomère (b21) qui suit, et le rapport molaire de l'unité de monomère (b21) à l'unité de monomère (b22) dans ledit polymère à base d'alkylvinyléther (unité de monomère (b21)/unité de monomère (b22)) est de 70/30 à 100/0 :
(b21) l'éthylvinyléther,
(b22) l'isobutylvinyléther.

5. Composition d'huile de machine frigorifique pour réfrigérant R32, comprenant un additif et l'huile de machine frigorifique selon l'une quelconque des revendications 1 à 4, dans laquelle ledit additif est le phosphate de triphényle et/ou le monooléate de glycérol, et la teneur en ledit additif est de 0,01 à 5 % en masse.

6. Composition de fluide de travail pour machines frigorifiques comprenant l'huile de machine frigorifique selon l'une quelconque des revendications 1 à 4 et le réfrigérant R32.

7. Composition de fluide de travail pour machines frigorifiques comprenant la composition d'huile de machine frigorifique selon la revendication 5 et le réfrigérant R32.
